# EUROPÄISCHE PATENTANMELDUNG

(11) **EP 3 190 072 A1**
(43) Veröffentlichungstag der Anmeldung: **12.07.2017**
(21) Anmeldenummer: 16150729.8
(22) Anmeldetag: 11.01.2016
(51) Int. Cl.: B65H 3/12, B65H 5/22

(54) **VEREINZELER FÜR BUCHBLÖCKE**

(71) Anmelder: Hunkeler AG, 4806 Wikon (CH)
(72) Erfinder: Graber, Kurt, 4805 Brittnau (CH); Wullschleger, Lukas, 4805 Brittnau (CH); Häfliger, Daniel, 6262 Langnau (CH)
(74) Vertreter: Schaad, Balass, Menzl & Partner AG

(57) **Zusammenfassung**

Die vorliegende Erfindung betrifft eine Vorrichtung zum Vereinzeln von Druckprodukten (1) aus einem Stapel (10), aufweisend eine eine im Wesentlichen horizontale Ebene (E) definierende Zufördereinrichtung (20), ein an einer Halterung (30) angeordnetes erstes Anschlagelement (31), sowie eine eine im Wesentlichen horizontale Ebene (E') definierende Wegfördereinrichtung (40), wobei die Zufördereinrichtung den Stapel gegen das erste Anschlagelement bewegt, wobei die Wegfördereinrichtung (40) das unterste Druckprodukt (1') aus dem Stapel (10) von der Zufördereinrichtung (20) übernimmt und wegfördert, wobei die Zufördereinrichtung (20) ein Vakuumförderband (21) umfasst, mittels welchem die Unterseite des untersten Druckprodukts (1') jedenfalls abschnittsweise angesaugt wird, sowie ein entsprechendes Verfahren.

## Beschreibung

Die Erfindung betrifft eine Vorrichtung sowie ein Verfahren zum Vereinzeln von Druckprodukten aus einem Stapel, wobei mittels einer Zufördereinrichtung ein Stapel aus einzelnen Druckprodukten (d.h. insbesondere aus klebegebundenen Druckprodukten, wie beispielsweise Buchblöcken) gegen einen Anschlag bewegt wird, so dass das jeweils unterste Druckprodukt den Anschlag passieren kann und von einer Wegfördereinrichtung übernommen und weggefördert wird.

Aus der EP 2 336 059 A1 ist eine Vorrichtung zum Vereinzeln von Druckprodukten aus einem Stapel bekannt, mit einer die Druckprodukte vereinzelnden Abschiebeeinrichtung und einer nachgeordneten, die vereinzelten Druckprodukte wegfördernden Abtransporteinrichtung, bei der die Abschiebeinrichtung und die Abtransporteinrichtung jeweils einen voneinander unabhängigen, rotativen Antrieb aufweisen. Die Abschiebeeinrichtung und die Abtransporteinrichtung werden unabhängig voneinander rotativ angetrieben und die Druckprodukte in der Abschiebeeinrichtung auf eine erste Geschwindigkeit und in der Abtransporteinrichtung auf eine, gegenüber der ersten Geschwindigkeit höhere, zweite Geschwindigkeit beschleunigt. Problematisch an der Lösung mit Schiebern ist jedoch, dass an der Unterseite des zuunterst liegenden Druckprodukts etwas vom Druckgut abgerieben werden kann. Des Weiteren können bei dieser Lösung insbesondere dann Schwierigkeiten auftreten, wenn Druckprodukte mit unterschiedlicher Dicke und unterschiedlichen Formaten verarbeitet werden sollen.

Es ist daher die Aufgabe der vorliegenden Erfindung, eine Vereinzelung von Druckprodukten aus einem Stapel bereitzustellen, welche ohne einen mechanischen Schieber sowie seitliche Anschläge bzw. Stützen auskommt und welche gleichzeitig eine besonders effektive und schonende (insbesondere friktionsfreie) Förderung der Druckprodukte bzw. des Stapels gewährleistet.

Diese Aufgabe wird erfindungsgemäss gelöst durch eine Vorrichtung zum Vereinzeln von Druckprodukten aus einem Stapel, aufweisend eine eine im Wesentlichen horizontale Ebene E definierende Zufördereinrichtung, ein an einer Halterung angeordnetes erstes Anschlagelement, sowie eine eine im Wesentlichen horizontale Ebene E' definierende Wegfördereinrichtung, wobei die Zufördereinrichtung den Stapel gegen das erste Anschlagelement bewegt, wobei die Wegfördereinrichtung das unterste Druckprodukt aus dem Stapel von der Zufördereinrichtung übernimmt und wegfördert, wobei die Zufördereinrichtung ein Vakuumförderband umfasst, mittels welchem die Unterseite des untersten Druckprodukts jedenfalls abschnittsweise angesaugt wird sowie durch ein Verfahren zum Vereinzeln von Druckprodukten aus einem Stapel, umfassend die folgenden Schritte: (a) jedenfalls abschnittsweises Ansaugen der Unterseite des untersten Druckprodukts aus dem Stapel mittels eines in einer Zufördereinrichtung erzeugten Vakuums; (b) Bewegen des Stapels mittels der Zufördereinrichtung gegen ein erstes Anschlagelement, so dass (c) das unterste Druckprodukt aus dem Stapel das erste Anschlagelement passiert und (d) von einer Wegfördereinrichtung übernommen und weggefördert wird.

In einer bevorzugten Ausführungsform der vorliegenden Erfindung ist das Vakuumförderband als Lochförderband mit einem daran angelegten Vakuum ausgestaltet, um ein Verrutschen des Stapels zu verhindern. Hierbei erfolgt, wie an sich bekannt, das Ansaugen bzw. Fixieren der Stapel auf dem Förderband mit einem definierten Unterdruck jeweils über die Länge der Förderstrecke. Dazu wird mittels einer Vakuumpumpe ein Vakuum erzeugt, dass etwa in einen Vakuumkanal geleitet wird. Über den Vakuumkanal wird das Vakuum gleichmässig verteilt und an die benötigten Stellen geleitet. Der Fördergurt ist dabei vorzugsweise entsprechend dem Vakuumkanal gelocht und überträgt den Unterdruck auf die zu fördernden Stapel. Die jeweilige Vakuumstärke kann über die Breite des Vakuum- bzw. Lochförderbands und, zum Teil, auch über das Lochmuster im Fördergurt justiert werden. Es können ggf. auch mehrere voneinander unabhängige Vakuumpumpen oder Vakuumkanäle eingesetzt werden.

In einer bevorzugten Ausführungsform wird im Übrigen anstelle eines einzigen Vakuumförderbands eine Serie von kleineren (in Reihe geschalteten) Förderbandsegmenten zum Transport der Stapel bzw. der Druckprodukte bereitgestellt. Hierdurch kann ggf. flexibler auf wechselnde Anforderungen reagiert werden. Hierbei gilt es allerdings zu beachten, dass insbesondere bei relativ langen Druckprodukten das Problem auftauchen kann, dass ein hinteres Förderbandsegment noch an einem Druckprodukt saugt, welches von einem vorderen Förderbandsegment gezogen wird. Diesem Problem kann dadurch begegnet werden, dass man die einzelnen Förderbandsegmente individuell ansteuert, so dass ggf. das hinterste Förderbandsegment abgeschaltet werden kann, wenn vorne noch gezogen wird.

In einer weiteren bevorzugten Ausführungsform der vorliegenden Erfindung weist das Vakuum- bzw. Lochförderband der Zufördereinrichtung eine Breite B₁ auf, welche kleiner ist als die Breite B₂ des Stapels, wobei vorzugsweise das Verhältnis der Breite B₁ zu der Breite B₂ zumindest 2:1, weiter vorzugsweise zumindest 3:1 und noch weiter vorzugsweise zumindest 4:1 beträgt. Der Stapel wird im Übrigen regelmässig mittig auf dem Vakuum- bzw. Lochförderband angeordnet.

In einer weiteren bevorzugten Ausführungsform der vorliegenden Erfindung weist die Zufördereinrichtung zu beiden Seiten des Vakuum- bzw. Lochförderbands angeordnete Ventileinrichtungen zur Erzeugung eines Luftkissens auf. Dabei sind zur Unterstützung eines sauberen, d.h. insbesondere eines friktionsfreien, Ausförderns auch grossformatiger Stapel in der Ebene E bzw. einem Auflagetisch neben dem Vakuum- bzw. Lochförderband vorzugsweise Kugelventile angeordnet, mittels derer jeweils ein Luftkissen erzeugt werden kann, auf denen die entsprechenden Seitenbereiche des Stapels zum Zwecke eines reibungsloseren Transports ruhen können. Insbesondere bei grossformatigen Stapeln wird damit auch sichergestellt, dass der Stapel in seiner Mitte sauber auf dem Vakuum- bzw. Lochförderband aufliegt. Die Kugelventile umfassen in der Regel federvorgespannte Kugeln welche, im unbelasteten Zustand, eine Luftdüse bzw. eine Luftaustrittsöffnung verschliessen und welche, bei Belastung, niedergedrückt werden und so die Luftdüse bzw. die Luftaustrittsöffnung freigeben.

In einer weiteren bevorzugten Ausführungsform der vorliegenden Erfindung ist das erste Anschlagelement höhenjustierbar an der Halterung angeordnet. Die Halterung ist dabei entsprechend im Übergangsbereich zwischen den Ebenen E bzw. E' der Zuförder- bzw. Wegfördereinrichtung angeordnet. Das erste Anschlagelement ist entsprechend oberhalb der Ebenen E bzw. E' höhenjustierbar angeordnet, damit das jeweils zu vereinzelnde, unterste Druckprodukt unterhalb des ersten Anschlagelements hindurchgeführt werden kann. Die Höhenjustierung kann dabei manuell oder automatisch (hierzu weiter unten im Detail) erfolgen. Mit anderen Worten wird mittels des höhenjustierbaren ersten Anschlagelements der Spalt S, welchen das erste Anschlagelement gegenüber der Förderebene E bzw. E' aufweist, an die Dicke des jeweiligen Druckprodukts angepasst. Typischerweise ist dabei der Spalt S nur unwesentlich dicker als das jeweilige Druckprodukt (ggf. mit Ausnahme des letzten Elements im Stapel). Der Spalt S entspricht dabei vorzugsweise der Dicke des jeweils untersten bzw. zu vereinzelnden Druckprodukts plus etwa 3 bis 5 mmm, besonders bevorzugt plus etwa 4 mm.

Bevorzugt ist die Höhenjustierung des ersten Anschlagelements (sowie ggf. auch das Anschlagelement selbst) senkrecht angeordnet. Es hat sich gezeigt, dass auf diese Weise der Zufördervorgang grundsätzlich qualitativ besser erfolgen kann, als wenn das Anschlagelement etwa schräg stünde. Beim Anstossen des Stapels an dem ersten senkrechten Anschlagelement wird der verbleibende Stapel durch den (elastischen) Aufprall leicht verformt. Dadurch entsteht eine Art Treppeneffekt, bei dem der Stapel leicht nach hinten geneigt wird. Dies hat den Vorteil, dass ein guter Angriffspunkt für eine Luftdüse geschaffen wird, welche ein Luftpolster zwischen dem zu vereinzelnden Druckprodukt und dem verbleibenden Stapel schafft. Diese Verformung macht aber in der Regel ein Zurückfahren des Stapels an ein zweites (rückwärtiges) Anschlagelement notwendig, um die Verschiebungen innerhalb des Stapels zu kompensieren (hierzu weiter unten im Detail).

In einer weiteren bevorzugten Ausführungsform der vorliegenden Erfindung umfasst die Wegfördereinrichtung ebenfalls ein Vakuumförderband. Andere Fördereinrichtungen, wie etwa ein Rollenförderer oder ein normales Transportband, sind hier allerdings auch denkbar. Vorzugsweise sind die Zufördereinrichtung und die Wegfördereinrichtung etwas voneinander beabstandet, um die Vereinzelung des jeweils untersten Druckprodukts im Zusammenspiel mit dem ersten Anschlagelement sowie die Übernahme des vereinzelten Druckprodukts durch die Wegfördereinrichtung zu gewährleisten. Insbesondere sollen natürlich die beiden Vakuumförderbänder nicht miteinander in Berührung kommen. Das (zweite) Vakuumförderband der Wegfördereinrichtung ist im Übrigen regelmässig breiter als dasjenige der Zufördereinrichtung und zwar um den Faktor 1,5 bis 2,5 vorzugsweise etwa um den Faktor 2.

In einer bevorzugten Ausführungsform der vorliegenden Erfindung ist an dem ersten Anschlagelement eine Luftdüsenvorrichtung angeordnet, welche, nach dem Anschlag des Stapels am ersten Anschlagelement, ein Luftkissen zwischen der Oberseite des unterhalb des ersten Anschlagelements hindurchgeförderten Druckprodukts und dem restlichen Stapel erzeugt. Hierzu ist die Luftdüsenvorrichtung bevorzugt an der Unterseite des höhenverstellbaren ersten Anschlagelements, gegen welches der auszufördernde Stapel gefahren wird, vorgesehen. Vorzugsweise umfasst die Luftdüsenvorrichtung mehrere kleine Luftauslässe bzw. Luftaustrittsöffnungen, welche über die gesamte Länge des Anschlags verteilt sind. Grundsätzlich ist aber auch eine einzelne (durchgehende) Düse bzw. Öffnung vorstellbar.

Gemäss einer besonders bevorzugten Ausführungsform weist die Luftdüsenvorrichtung eine zinnenartige Struktur auf. Die Luftaustrittsöffnungen sind dabei vorzugsweise in den Einbuchtungen zwischen den einzelnen Zinnen vorgesehen.

Weiter vorzugsweise ist (bei beiden vorgenannten Ausführungsformen) die Luftdüsenvorrichtung winkelmässig verstellbar an dem ersten Anschlagelement angeordnet. Der bevorzugte Winkel unter dem die Luft ausgeblasen wird beträgt üblicher Weise (gegenüber der Senkrechten) zwischen 5° und 50°, noch bevorzugter zwischen 15° und 40°.

In einer weiteren bevorzugten Ausführungsform der vorliegenden Erfindung umfasst die Luftdüsenvorrichtung bzw. das erste Anschlagelement eine erste Erkennungsvorrichtung, welche zur Erkennung der Vorderkante des untersten Druckprodukts, unmittelbar nach dem Anschlag des Stapels am ersten Anschlagelement dient. Zweckmässigerweise ist diese erste Erkennungsvorrichtung seitlich und verstellbar am ersten Anschlagelement angeordnet. Mittels der ersten Erkennungsvorrichtung kann über eine geeignete Steuerung die Luftdüsenvorrichtung zur Erzeugung des vorerwähnten Luftkissens aktiviert werden. Sobald das unterste Druckprodukt ausfährt, wird Luft zwischen dieses und den Rest des Stapels geblasen.

In einer weiteren bevorzugten Ausführungsform der vorliegenden Erfindung weist die Wegfördereinrichtung ein Andrückelement für das jeweils vereinzelte (und wegzufördernde) Druckprodukt auf. Das Andrückelement ist vorzugsweise in Form einer drehbar gelagerten Bürste ausgebildet, welche zur Drehung vorzugsweise (aber nicht notwendigerweise) mittels eines Motors angetrieben wird. Es ist auch möglich, dass die Bürste ohne Antrieb mit dem auszufördernden Druckprodukt mitläuft.

Die Bürste rotiert jeweils gegenläufig zum Förderband der Wegfördereinrichtung. Die Bürste ist des Weiteren in der Regel - in Transportrichtung gesehen - auf der Rückseite des ersten Anschlagelements an der Halterung montiert (d.h. oberhalb des Anfangsbereichs des Förderbands der Wegfördereinrichtung) und wird weiter vorzugsweise mittels eines Federmechanismus nach unten, d.h. in Richtung des wegzufördernden Druckprodukts, vorgespannt. Anstelle einer Bürste könnten beispielsweise aber auch Anpressrollen oder ein Anpressbügel als Andrückelemente vorgesehen sein.

Zur Gewährleistung einer störungsfreien Vereinzelung ist das Andrückelement bzw. die Bürste ausgesprochen wichtig. In diesem Zusammenhang sei angemerkt, dass der Rücktransport des verbliebenen Stapels bereits einsetzt, bevor der unterste Buchblock vollständig ausgefördert ist. Mit anderen Worten bewegt sich also das (schmalere) Vakuumförderband der Zufördereinrichtung bereits rückwärts (d.h. um den verbleibenden Stapel gegen den rückwärtigen Anschlag zu fahren) bevor das unterste Druckprodukt jeweils ausgefördert ist. Damit das unterste Druckprodukt (bzw. der unterste Buchblock) trotzdem vollständig ausfährt, wird dieses jetzt aber vom zweiten Vakuumförderband (d.h. des Wegförderers) gezogen.

Das Andrückelement bzw. die Bürste stellt dabei sicher, dass das Druckprodukt an das Transportband der Wegfördereinrichtung gedrückt wird. Hierdurch wird sichergestellt, dass die Haftung am ausfördernden Transportband höher ist als diejenige am schmaleren Band der Zufördereinrichtung, welches bereits wieder zurück fährt, um einen sauberen Übergang sicherzustellen. Auf diese Weise kann nämlich insbesondere ein Verknittern bzw. Umlegen des untersten Blattes des neu untersten Druckprodukts im restlichen Stapel (d.h. desjenigen Druckprodukts welches nach der Übergabe des untersten Druckprodukts an die Wegfördereinrichtung beim Rücktransport des Reststapels zuunterst zum Liegen kommt) verhindert werden, sowie Verschiebungen von Blättern im Druckprodukt bzw. im Stapel generell.

Die Umfangsgeschwindigkeit der Bürste ist bevorzugt gleich gross oder etwas höher als die Geschwindigkeit des Transport- bzw. Förderbands der Wegfördereinrichtung. Damit wird verhindert, dass die obersten Blätter des wegzufördernden Druckprodukts verknittert werden.

Während der kurzen Zeit der Übernahme des untersten Buchblocks durch das (breitere) Förderband der Wegfördereinrichtung laufen vorzugsweise beide Förderbänder synchron mit derselben Geschwindigkeit, um eine störungsfreie Übergabe gewährleisten zu können. Davor oder danach können die Geschwindigkeiten der beiden Bänder jedoch völlig unterschiedlich sein. Wie oben beschrieben, bewegen sich die beiden Förderbänder zeitweise sogar in entgegengesetzten Richtungen.

In einer weiteren bevorzugten Ausführungsform der vorliegenden Erfindung ist an der Halterung eine zweite Erkennungsvorrichtung angeordnet, welche erkennt, wann die Vorderkante des vereinzelten bzw. wegzufördernden Druckprodukts von der Wegfördereinrichtung erfasst wurde. Die zweite Erkennungsvorrichtung ist dabei - in Transportrichtung gesehen - auf der Rückseite der Halterung montiert und zwar in der Regel oberhalb (und ggf. etwas stromabwärts) von der Bürste bzw. dem Andrückelement. Sobald die führende Kante des Buchblocks diesen Sensor passiert hat und vom Förderband der Wegfördereinrichtung operativ erfasst wurde, startet das (schmalere) Vakuumförderband der Zufördereinrichtung den Rücktransport des restlichen Stapels.

In einer weiteren bevorzugten Ausführungsform der vorliegenden Erfindung umfasst die Zufördereinrichtung ein zweites, rückwärtiges, Anschlagelement. Dieses rückwärtige Anschlagelement dient zur Ausrichtung des verbliebenen Stapels. In der Regel ist es versenkbar ausgestaltet, so dass es in einer Transportlinie verwendet werden kann, ohne bei der Einlieferung eines neuen Stapels zu stören, d.h. wenn der vorhergehende Stapel vollständig vereinzelt wurde. Andere geeignete Verstellmechanismen sind ebenfalls denkbar (z.B. seitliches Verfahren, aufwärtiges Verfahren bzw. Verschwenken etc.).

Die Rückfahrt des verbleibenden Stapels dient aber nicht nur zur Ausrichtung - und damit der Stabilisation - des verbleibenden Stapels, sondern vorzugsweise auch zum Auslesen von Informationen, welche etwa auf der Unterseite des (neu) untersten Druckprodukts bereitgestellt sind; gleiches gilt insbesondere auch beim Einfahren des noch vollständigen Stapels in die Zufördereinrichtung.

Dies geschieht vorzugsweise mittels einer dritten Erkennungsvorrichtung, etwa einem Scanner oder einer Kamera, zum Lesen von entsprechenden Codes (z.B. Strich- bzw. Barcodes). Dies kommt insbesondere dann zum Tragen, wenn Druckprodukte unterschiedlichen Formats gestapelt sind. Der Code kann insoweit Informationen bezüglich der Dicke, der Länge sowie ggf. auch der Breite der einzelnen Druckprodukte enthalten, so dass die entsprechenden Einstellungen automatisch vorgenommen werden können (d.h. beispielsweise die Höhe des ersten Anschlagelements, die Geschwindigkeiten der beiden Vakuumförderbänder sowie der Andrückbürste, die Ansteuerung der seitlichen Kugelventile oder aber die Bewegung des rückwärtigen Anschlags). Die entsprechenden Informationen müssen allerdings nicht zwingend im Code (selbst) enthalten sein; vielmehr kann der Code z.B. auch eine Referenz auf einen elektronischen Datenspeicher (etwa eine Datenbank) bilden, welcher seinerseits die erforderlichen Daten vorhält.

In einer bevorzugten Ausführungsform des erfindungsgemässen Verfahrens umfassen die Zufördereinrichtung und die Wegfördereinrichtung Vakuumförderbänder, wobei vorzugsweise das Vakuumförderband der Wegfördereinrichtung eine Breite B₃ aufweist welche grösser ist als die Breite B₁ des Vakuumförderbands der Zufördereinrichtung. Auf diese Weise kann insbesondere eine sichere Übernahme des jeweiligen Druckprodukts durch die Wegfördereinrichtung bzw. deren Vakuumförderband gewährleistet werden.

In einer weiteren bevorzugten Ausführungsform des erfindungsgemässen Verfahrens werden, wie vorstehend bereits erläutert, jedenfalls zu Beginn der Übernahme des untersten Druckprodukts durch die Wegfördereinrichtung die Vakuumförderbänder der Zufördereinrichtung und der Wegfördereinrichtung synchron mit derselben Geschwindigkeit betrieben.

In einer weiteren bevorzugten Ausführungsform des erfindungsgemässen Verfahrens wird die Zufördereinrichtung mit dem restlichen Stapel in rückwärtiger Richtung bewegt noch bevor die Übernahme des untersten Druckprodukts durch die Wegfördereinrichtung abgeschlossen ist (z.B. wenn die Vorderkante des jeweiligen Druckprodukts von der zweiten Erkennungsvorrichtung erkannt wird). Auf diese Weise kann ein sauberes Auseinanderziehen des zu vereinzelnden Druckprodukts und des Reststapels erzielt werden. In der Folge wird der Reststapel an dem rückwärtigen Anschlagelement ausgerichtet.

In einer weiteren bevorzugten Ausführungsform des erfindungsgemässen Verfahrens werden, wie zuvor beschrieben, während des Rücktransports des restlichen Stapels Informationen auf der Unterseite des nunmehr untersten Druckprodukts ausgelesen. Dies geschieht mittels einer entsprechenden dritten Erkennungsvorrichtung.

In einer noch weiteren bevorzugten Ausführungsform des erfindungsgemässen Verfahrens ist das erste Anschlagelement gegenüber einer Halterung höhenjustierbar, um so den Ausförderspalt (Spalt S) an die Dicke der jeweiligen Druckprodukte anzupassen (d.h. etwa mittels der codierten Informationen). Im Übrigen kann erfindungsgemäss eine dynamische Anpassung genauso hinsichtlich weiterer Verfahrensparameter vorgenommen werden, nämlich etwa die Steuerung des Ansaug-Vakuums der Transportbänder sowie die Steuerung der Transportgeschwindigkeiten.

Die beigefügten Zeichnungen dienen zum Zwecke der Veranschaulichung und stellen insoweit lediglich beispielhaft bevorzugte Ausführungsformen der vorliegenden Erfindung dar.

Es zeigt:
- Fig. 1: eine perspektivische Ansicht einer erfindungsgemässen Vorrichtung bei der Anlieferung eines Stapels von Druckprodukten;
- Fig. 2: eine perspektivische Ansicht einer erfindungsgemässen Vorrichtung beim Anschlagen des Stapels am ersten Anschlagelement;
- Fig. 3: eine perspektivische Ansicht einer erfindungsgemässen Vorrichtung beim Wegfördern des vereinzelten Druckprodukts in Transportrichtung sowie (gleichzeitig) beim Transport des Reststapels in rückwärtiger Richtung;
- Fig. 4: eine perspektivische Ansicht einer erfindungsgemässen Vorrichtung in derselben Stellung wie in Fig. 3, vom wegförderseitigen Ende her gesehen;
- Fig. 5: eine Detailansicht einer bevorzugten Ausführungsform einer Luftdüsenvorrichtung in Übereinstimmung mit der vorliegenden Erfindung; und
- Fig. 6: eine schematische teilweise Seitenansicht einer erfindungsgemässen Vorrichtung.

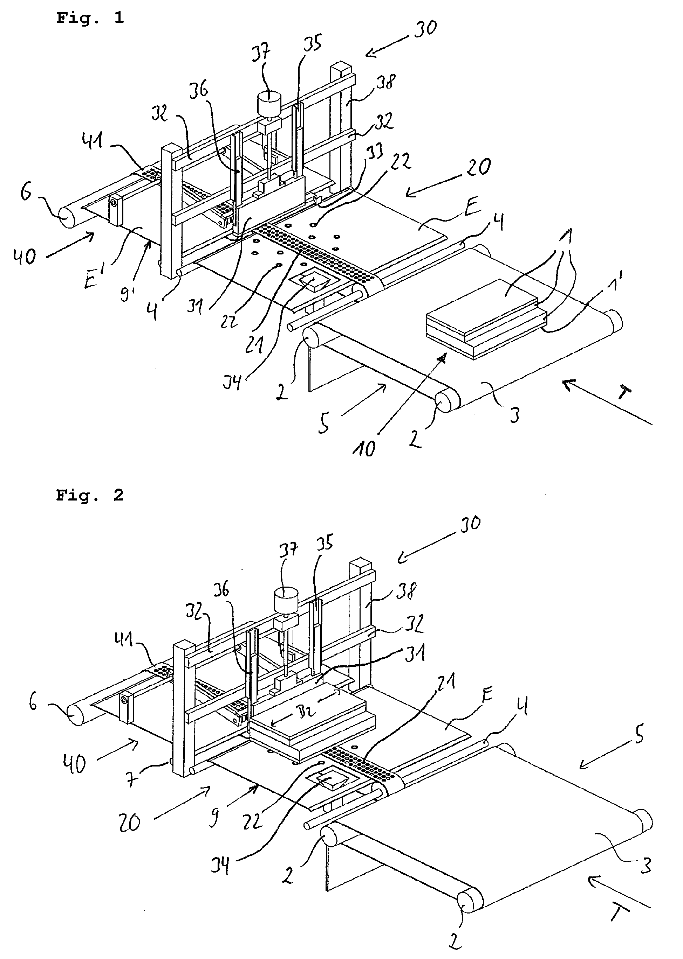

Die **Fig. 1** zeigt eine perspektivische Ansicht einer erfindungsgemässen Vorrichtung bei der Anlieferung eines Stapels 10, welcher vorliegend (beispielhaft) aus vier Druckprodukten 1 bzw. 1' besteht, wobei das Druckprodukt 1' das unterste Druckprodukt im Stapel 10 darstellt. Das Anlieferband 5 umfasst zumindest zwei Rollen 2, um die der Liefergurt 3 herum verläuft. Die codierten Informationen auf der Unterseite des untersten Druckprodukts 1' werden vorzugsweise in der Zufördereinrichtung 20 mittels der (dritten) Erkennungsvorrichtung 34 ausgelesen und über eine geeignete Steuerung (nicht gezeigt) entsprechend umgesetzt.

Der Liefergurt 3 ist üblicherweise aus Kunststoff ausgebildet, bzw. aus gummiertem Kunststoff, um ein Verrutschen des Stapels 10 bzw. der einzelnen Druckprodukte 1 bzw. 1' bei der Anlieferung zu verhindern. Die Transportrichtung ist mit dem Pfeil T angegeben. Das Anlieferband 5 ist in der Regel motorgetrieben, wobei eine der beiden Rollen 2 auch als Antriebsrolle dienen kann. Von dem Anlieferband 5 wird der Stapel 10 dann übergeben an die Zufördereinrichtung 20.

Die Zufördereinrichtung 20 definiert generell eine Ebene E, üblicherweise in Form eines Auflagetisches 9 (vgl. **Fig. 2**), und ist darüber hinaus mit einem Vakuumförderband 21 versehen. Das Vakuumförderband 21 ist in dieser Ausführungsform, wie zu sehen, als Lochgurtförderband ausgestaltet. An dieses wird ein Vakuum angelegt, um die Unterseite des untersten Druckproduktes 1' des Stapels 10 anzusaugen.

Auf diese Weise kann der Stapel 10 sicher weitergefördert werden, d.h. insbesondere ohne dass es zu einem Verrutschen der einzelnen Druckprodukte 1 bzw. 1' innerhalb des Stapels 10 kommt. Das Ansaugen bzw. Fixieren des Stapels 10 erfolgt dabei auf dem Förderband 21 mit einem definierten Unterdruck, und zwar jeweils vorzugsweise über die Länge der Förderstrecke.

Üblicher Weise wird mittels einer Vakuumpumpe (nicht gezeigt) ein Vakuum erzeugt, das etwa in einen Vakuumkanal geleitet wird. Über den Vakuumkanal wird das Vakuum gleichmässig verteilt und an die benötigten Stellen geleitet. Durch das gelochte Vakuumförderband 21 wird schliesslich der Unterdruck auf den zu fördernden Stapel 10 übertragen.

Wie auch im Zusammenhang mit **Fig. 2** zu sehen, dient die Zufördereinrichtung 20 dazu, den Stapel 10 gegen ein erstes Anschlagelement 31 zu fördern, welches an einer Halterung 30 angeordnet ist. Der Stapel 10 besteht wiederum aus den vier Druckprodukten 1, 1, wobei das unterste Druckprodukt mit dem Bezugszeichen 1' bezeichnet ist.

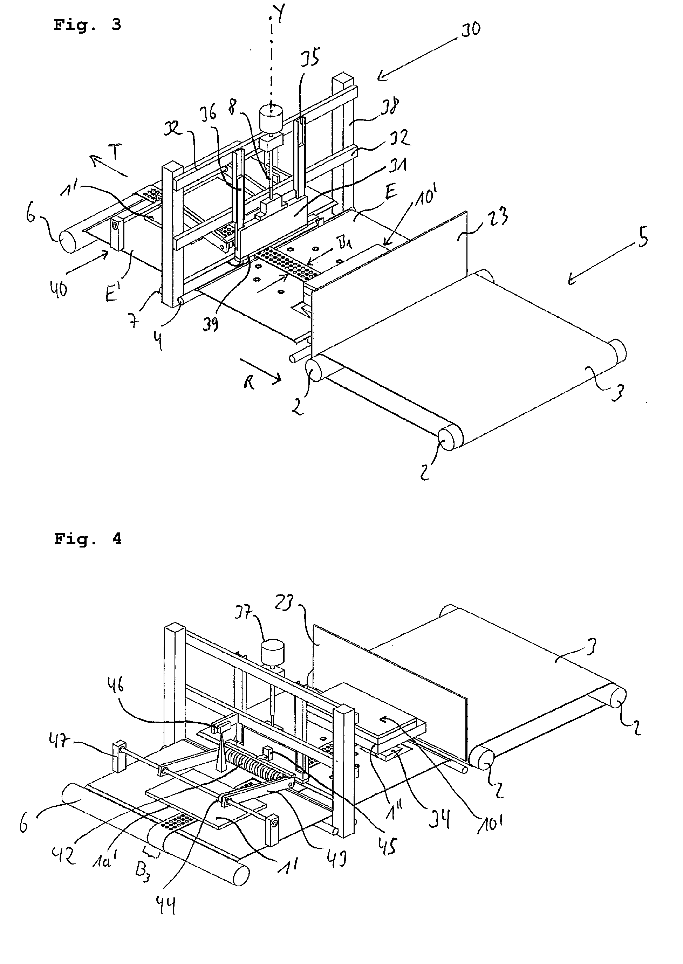

Die Druckprodukte weisen vorliegend alle eine Breite B₂ auf, sie sind jedoch hinsichtlich ihrer Länge (d.h. ihrer Abmessung in Transportrichtung T) unterschiedlich ausgestaltet. Grundsätzlich ist es aber auch denkbar, dass die Druckprodukte 1 bzw. 1' unterschiedliche Breiten aufweisen. Insbesondere aber unterscheiden sich die einzelnen Druckprodukte 1 bzw. 1' hinsichtlich ihrer Dicke. Das Vakuumförderband 21 verläuft um den die Ebene E definierenden Auflagetisch 9 herum, und zwar um die Rollen 4, welche in der vorliegenden Ausführungsform in ihrer Mitte eine Verdickung aufweisen. Die Verdickung entspricht der Breite B₁ (vgl. **Fig. 3**) des Gurts des Vakuumförderbandes 21.

Der Stapel 10 liegt vorzugsweise mittig auf dem wesentlich schmaleren Vakuumförderband 21 auf, so dass er zu beiden Seiten auch auf dem Auflagetisch 9 zu Liegen kommt. Damit es zu keinen Friktionen bzw. zum Abrieb von Druckgut kommt, sind in dem Auflagetisch 9 Ventileinrichtungen 22 integriert, welche regelmässig in Form von Kugelventilen ausgebildet sind. Durch die Druckkraft, welche die über das Vakuumförderband 21 überlappenden Seitenbereiche des Stapels 10 auf die Kugelventile 22 ausüben, werden diese aktiviert (d.h. in der Regel wird eine Kugel gegen eine Federkraft nach unten gedrückt, so dass Luft aus der entsprechenden Austrittsöffnung bzw. Düse austreten kann). Auf diese Weise wird ein Luftkissen erzeugt, auf welchem der Stapel während der Förderung durch das Vakuumförderband 21 problemlos gleiten kann, d.h. bis er das erste Anschlagelement 31 erreicht.

Das erste Anschlagelement 31 ist höhenjustierbar bzw. höhenverstellbar an einer Halterung 30 geführt. Die Halterung 30 weist zunächst zwei Längsbalken 38 auf, welche über zwei Querbalken 32 verbunden sind. An den Querbalken 32 sind wiederum in vertikaler Richtung zwei Führungsschienen 35 angeordnet, in welchen korrespondierende Führungsstangen 36 des ersten Anschlagelements 31 gleitend geführt sind. Die Führungsstangen 36 sind regelmässig auf lösbare Weise mit dem ersten Anschlagelement 31 befestigt.

Zwischen den beiden Führungsschienen 35 ist an dem oberen der beiden Querbalken 32 ein Elektromotor 37 angeordnet, welcher eine Gewindestange 8 antreibt, mittels welcher das erste Anschlagelement 31 hoch und runter bewegt werden kann, um auf diese Weise den Spalt S zwischen der Unterseite des ersten Anschlagelements 31 und der Ebene E bzw. dem Auflagetisch 9 auf die entsprechende Dicke des jeweils untersten Druckprodukts 1' einstellen zu können. An dem ersten Anschlagelement 31 ist in der Regel auch eine erste Erkennungsvorrichtung 33 angeordnet, welche dazu dient, unmittelbar nach dem Anschlag des Stapels 10 zu erkennen, wann die Vorderkante 1a' des zu vereinzelnden, untersten Druckproduktes 1' aus dem Stapel 10 hervorgeschoben wird bzw. unter das erste Anschlagelement 31 gelangt.

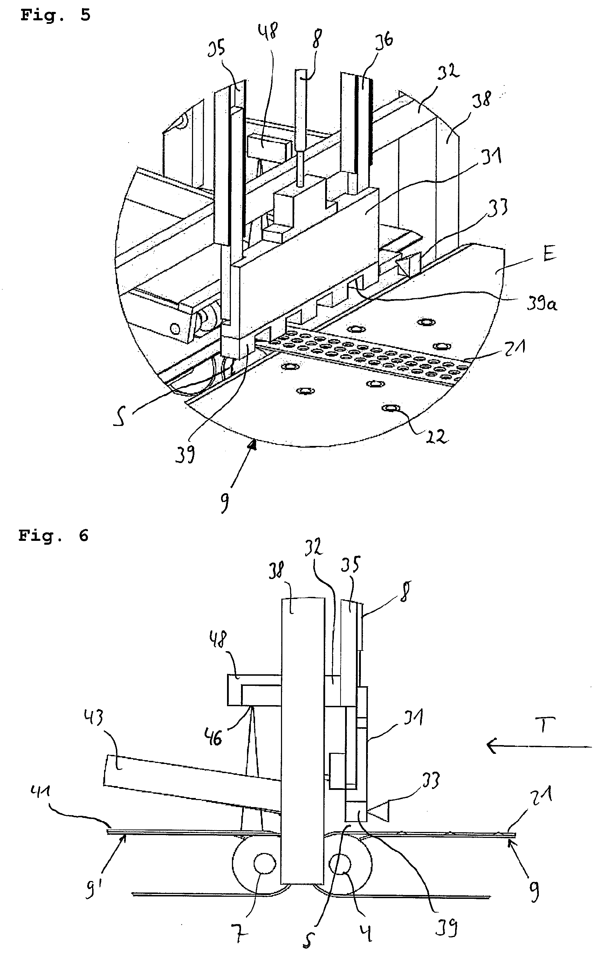

In diesem Moment wird nämlich über eine, an sich bekannte und hier nicht dargestellte, Steuerung eine Luftdüsenvorrichtung 39 (vgl. **Fig. 5**) an der Unterseite des ersten Anschlagelements 31 aktiviert. Auf diese Weise wird ein Luftkissen zwischen der Oberseite des zu vereinzelnden Druckproduktes 1' und dem restlichen Stapel 10' bereitgestellt, was zu einer reibungsarmen Vereinzelung bzw. zu einer zuverlässigen Übergabe des Druckprodukts 1' an die Wegfördervorrichtung 40 dient.

Hierbei gilt es zu beachten, dass bereits bevor das zu vereinzelnde unterste Druckprodukt 1' vollständig auf dem Förderband 41 der Wegfördereinrichtung 40 aufliegt, das Vakuumförderband 21 der Zufördereinrichtung bereits rückwärts betrieben wird (d.h. in Richtung des Pfeils R). Dies trägt wiederum dazu bei, dass die Vereinzelung reibungslos verläuft und insbesondere die unterste Seite des Reststapels 10' nicht verknittert wird bzw. sich nicht umlegt.

In **Fig. 3** erkennt man das von der Wegfördereinrichtung 40 bzw. deren Vakuumförderband 41 übernommene Druckprodukt 1', welches wiederum breiter ist als der Fördergurt des Vakuumförderbandes 41 mit seiner Breite B₃ (vgl. **Fig. 4**). Der Auflagetisch 9' der Wegfördereinrichtung 40 weist in der gezeigten Ausführungsform keine Ventileinrichtung 22, (bzw. Kugelventile) auf, da hier nicht mehr das ganze Gewicht des Reststapels 10' auf dem vereinzelten Druckprodukt 1' lastet.

Allerdings ist es natürlich vorstellbar, dass auch der Auflagetisch 9' der Wegfördereinrichtung 40 entsprechende Kugelventile 22 aufweist, je nach der gewünschten Breite des zu vereinzelnden Druckprodukts. Das Vakuumförderband 41 der Wegfördereinrichtung 40 wird über die Rollen 6 und 7 angetrieben, wobei jedenfalls die Rolle 7 in ihrem Aufbau den Rollen 4 der Zufördereinrichtung 20 entspricht. Dadurch, dass die Rollen 4 und 7 nicht über ihre ganze Länge den vollen Durchmesser aufweisen, kann Platz eingespart werden, welcher für den störungsfreien Betrieb der Vorrichtung vorteilhaft ist.

Wie am Besten in **Fig. 4** zu erkennen, ist auf der - in Transportrichtung T gesehen - rückwärtigen Seite der Halterung 30 eine zweite Erkennungsvorrichtung 46 vorgesehen. Diese ist vorzugsweise so angeordnet, dass sie erkennt, wann das Druckprodukt 1' mit dem Vakuumförderband 41 der Wegfördereinrichtung operativ in Eingriff gelangt. Dies löst über die vorerwähnte Steuerung den Rücktransport des Reststapels 10' auf dem Vakuumförderband 21 der Zufördereinrichtung 20 aus und verhindert ein Verknittern bzw. Umlegen von insbesondere der untersten Seite des untersten Druckproduktes 1'' des Reststapels 10'.

Um die Übernahme des vereinzelten Druckproduktes 1' durch die Wegfördereinrichtung 40 störungsfrei gewährleisten zu können, ist in der Regel noch ein Andrückelement 42 (regelmässig in Form einer Bürste) vorgesehen, mittels dem das Druckprodukt 1' auf das Vakuumförderband 41 der Wegfördereinrichtung 40 gedrückt wird. Das Andrückelement ist dabei über Haltestangen 43 an einer Haltevorrichtung 47 angelenkt und wird mittels eines Federelements 45, welches etwa auf der Rückseite des ersten Anschlagelements 31 montiert ist, nach unten auf das Druckprodukt 1' gedrückt. Der sich auf dem Rücktransport befindende Reststapel 10' wird gegen ein zweites, rückwärtiges, Anschlagelement 23 gefahren, um eine Neuausrichtung desselben zu bewerkstelligen. Dies ist mitunter notwendig, da es beim Anschlagen des Stapels 10 an das erste Anschlagelement 31 zu Verschiebungen innerhalb des Stapels 10 bzw. des Reststapels 10' kommen kann.

Das rückwärtige Anschlagelement 23 ist in der Regel zwischen dem Anlieferband 5 und der Zufördereinrichtung 20 versenkbar angeordnet, um die Anlieferung von neuen Stapeln 10 nicht zu behindern. Das Hochfahren des zweiten bzw. rückwärtigen Anschlagelements 23 wird in der Regel durch die zweite Erkennungsvorrichtung 46 ausgelöst. Auf dem Rücktransportweg entlang dem Pfeil R (vgl. **Fig. 3**) passiert der Reststapel 10' mit seinem neu untersten Druckprodukt 1'' noch eine dritte Erkennungsvorrichtung 34, welche Informationen auf der Unterseite des neu untersten Druckprodukts 1'' auslesen kann.

Die dritte Erkennungsvorrichtung 34 ist beispielsweise in Form eines Scanners oder einer Kamera ausgestaltet, welche einen Bar- bzw. Strichcode auf der Unterseite des jeweils untersten Druckprodukts erkennt. Dabei kann es sich um normale Bar- bzw. Strichcodes handeln, oder auch um Matrixbarcodes. Die Codes enthalten jeweils Informationen hinsichtlich der Dicke oder aber auch der Länge und Breite des neu zu vereinzelnden, untersten Druckprodukts 1'' des Reststapels 10'. Die entsprechenden Informationen müssen allerdings nicht zwingend im Code (selbst) enthalten sein; vielmehr kann der Code z.B. auch eine Referenz auf einen elektronischen Datenspeicher (etwa eine Datenbank) bilden, welcher seinerseits die erforderlichen Daten vorhält. Mit anderen Worten kann auf diese Weise eine automatische Einstellung des ersten Anschlagelements 31 auf das neu zu vereinzelnde Druckprodukt 1'' vorgenommen werden (d.h. eine Anpassung des Spalts S). Der Spalt S entspricht vorzugsweise der Dicke des jeweils untersten bzw. zu vereinzelnden Druckprodukts plus etwa 3 bis 5 mmm, besonders bevorzugt plus etwa 4 mm.

Der vorstehend geschilderte Verfahrensablauf wiederholt sich so lange, bis auch das oberste Druckprodukt 1 eines Stapels 10 vereinzelt wurde und ein neuer Stapel 10 vom Anlieferband 5 in die Zufördereinrichtung 20 eingeliefert wird.

Die **Fig. 5** zeigt nun eine Detailansicht einer bevorzugten Ausführungsform einer Luftdüsenvorrichtung 39, welche an der Unterseite des ersten Anschlagelements 31 angeordnet ist. Die Luftdüsenvorrichtung weist gemäss dieser bevorzugten Ausführungsform eine zinnenartige Struktur auf. Die Luftaustrittsöffnungen 39a sind dabei in den Einbuchtungen der Zinnen vorgesehen. Die vorliegende Darstellung der zinnenartigen Struktur dient dem Zweck der besseren Anschaulichkeit und ist insoweit nicht unbedingt massstäblich zu sehen.

Wie in **Fig. 3** angedeutet, kann die Luftdüsenvorrichtung 39 allerdings auch in Form einer im Wesentlichen flachen Leiste, mit entsprechenden Luftaustrittsöffnungen darin, bereitgestellt werden.

In **Fig. 6** wird die erfindungsgemässe Vorrichtung noch einmal schematisch in einer teilweisen Seitenansicht dargestellt. Der Längsbalken 38 trennt dabei die beiden Auflagetische 9 bzw. 9' mit ihren Vakuumförderbändern 21 bzw. 41. Das Vakuumförderband 21 der Zufördereinrichtung 20 verläuft dabei um die Rolle 4 und das Vakuumförderband 41 der Wegfördereinrichtung 40 verläuft dabei um die Rolle 7.

Rechts von dem Längsbalken 38 ist etwa oberhalb der Rolle 4 an dem (unteren) Querbalken 32 die Führungsschiene 35 für die Führungsstange 36 des ersten Anschlagelements 31 angeordnet. An der Unterseite des ersten Anschlagelements 31 ist die Luftdüsenvorrichtung 39 angeordnet. In Transportrichtung T gesehen, ist auf der Höhe der Vorderseite des ersten Anschlagelements 31 die erste Erkennungsvorrichtung 33 vorgesehen, welche etwa an einem seitlichen Bereich bzw. seitlichen Fortsatz der Luftdüsenvorrichtung 39 montiert ist.

Die erste Erkennungsvorrichtung 33 erkennt, wenn - unmittelbar nach dem Anschlag des Stapels 10 an dem ersten Anschlagelement 31 - sich die Vorderkante 1a' des zu vereinzelnden, untersten Druckproduktes 1' aus dem Stapel 10 hervorschiebt bzw. unter das erste Anschlagelement 31 gelangt. Entsprechend wird dann die Luftdüsenvorrichtung 39 aktiviert. Es sei in diesem Zusammenhang angemerkt, dass die erste Erkennungsvorrichtung 33 insofern regelmässig nicht über die Vorderseite des ersten Anschlagelements 31 hervorsteht. Die schematische Darstellung gemäss Fig. 6 soll andeuten, dass die Erkennung im Bereich bzw. an der Vorderkante des ersten Anschlagelements 31 erfolgt.

Auf der in Transportrichtung T gesehen linken Seite des Längsbalkens 38 erkennt man die zweite Erkennungsvorrichtung 46, welche an einem Befestigungsvorsprung 48 montiert ist, welcher seinerseits von dem (unteren) Querbalken 32 abragt.

Die zweite Erkennungsvorrichtung 46 ragt soweit über den Auflagetisch 9' bzw. das Vakuumförderband 41, dass sie erkennen kann, wenn das Druckprodukt 1' mit dem Vakuumförderband 41 der Wegfördereinrichtung operativ in Eingriff gelangt ist (d.h. so weit auf dem Vakuumförderband 41 zum Aufliegen gekommen ist, dass es alleine von diesem weggefördert werden kann, selbst wenn ein Teil des Druckprodukts 1' noch auf dem Vakuumförderband 21 aufliegt). Über eine an sich bekannte Steuerung wird in diesem Moment der Rücktransport des Reststapels 10' auf dem Vakuumförderband 21 der Zufördereinrichtung 20 ausgelöst, wodurch ein Verknittern bzw. Umlegen von insbesondere des untersten Blattes des untersten Druckproduktes 1'' des Reststapels 10' auf effektive Weise verhindert werden kann. Anders ausgedrückt wird durch dieses Umschalten auf gegenläufigen Betrieb ein sauberes Auseinanderziehen des zu vereinzelnden Druckprodukts 1' und des Reststapels 10' erzielt.

Schliesslich erkennt man in **Fig. 6** wiederum die Haltestangen für das Andrückelement 42, mit welchem das Druckprodukt 1' auf das Vakuumförderband 41 der Wegfördereinrichtung 40 gedrückt wird.

### Bezugszeichenliste:

- 1: Druckprodukte
- 1': unterstes Druckprodukt des Stapels (zur Vereinzelung)
- 1a': Vorderkante des zu vereinzelnden Druckprodukts
- 1'': unterstes Druckprodukt des Reststapels
- 2: Rollen
- 3: Liefergurt
- 4: Rollen
- 5: Anlieferband
- 6: Rollen
- 7: Rollen
- 8: Gewindestange
- 9: Auflagetisch
- 9': Auflagetisch
- 10: Stapel
- 10': Reststapel
- 20: Zufördereinrichtung
- 21: Vakuumförderband
- 22: Ventileinrichtung
- 23: zweites (rückwärtiges) Anschlagelement
- 30: Halterung
- 31: erstes Anschlagelement
- 32: Querbalken
- 33: erste Erkennungsvorrichtung
- 34: dritte Erkennungsvorrichtung
- 35: Führungsschienen
- 36: Führungsstangen
- 37: Motor
- 38: Längsbalken
- 39: Luftdüsenvorrichtung
- 39a: Luftaustrittsöffnungen
- 40: Wegfördereinrichtung
- 41: Vakuumförderband
- 42: Andrückelement (Bürste)
- 43: Haltestangen
- 44: Antriebsriemen
- 45: Federelement
- 46: zweite Erkennungsvorrichtung
- 47: Haltevorrichtung
- 48: Befestigungsvorsprung
- B₁: Breite Vakuumförderband (Zufördereinrichtung)
- B₂: Breite Stapel
- B₃: Breite Vakuumförderband (Wegfördereinrichtung)
- E: Ebene Zufördereinrichtung
- E': Ebene Wegfördereinrichtung
- R: rückwärtige Transportrichtung
- S: Spalt
- T: Transportrichtung
- Y: vertikale Achse

## Patentansprüche

1. Vorrichtung zum Vereinzeln von Druckprodukten (1, 1') aus einem Stapel (10), aufweisend
eine eine im Wesentlichen horizontale Ebene (E) definierende Zufördereinrichtung (20),
ein an einer Halterung (30) angeordnetes erstes Anschlagelement (31), sowie
eine eine im Wesentlichen horizontale Ebene (E') definierende Wegfördereinrichtung (40), wobei
die Zufördereinrichtung (20) den Stapel (10) gegen das erste Anschlagelement (31) bewegt, wobei
die Wegfördereinrichtung (40) das unterste Druckprodukt (1') aus dem Stapel (10) von der Zufördereinrichtung (20) übernimmt und wegfördert,
**dadurch gekennzeichnet, dass**
die Zufördereinrichtung (20) ein Vakuumförderband (21) umfasst, mittels welchem die Unterseite des untersten Druckprodukts (1') jedenfalls abschnittsweise angesaugt wird.

2. Vorrichtung gemäss Anspruch 1, **dadurch gekennzeichnet, dass** das Vakuumförderband (21) als Lochförderband mit einem daran angelegten Vakuum ausgestaltet ist.

3. Vorrichtung gemäss Anspruch 1 oder 2, **dadurch gekennzeichnet, dass** das Vakuumförderband (21) eine Breite (B₁) aufweist, welche kleiner ist als die Breite (B₂) des Stapels (10), wobei vorzugsweise das Verhältnis der Breite (B₁) zu der Breite (B₂) zumindest 2:1, weiter vorzugsweise zumindest 3:1 und noch weiter vorzugsweise zumindest 4:1 beträgt.

4. Vorrichtung gemäss Anspruch 3, **dadurch gekennzeichnet, dass** die Zuführeinrichtung (20) zu beiden Seiten des Vakuumförderbands (21) angeordnete Ventileinrichtungen (22) zur Erzeugung eines Luftkissens aufweist.

5. Vorrichtung gemäss einem der vorhergehenden Ansprüche, **dadurch gekennzeichnet, dass** das erste Anschlagelement (31) höhenjustierbar an der Halterung (30) angeordnet ist.

6. Vorrichtung gemäss einem der vorhergehenden Ansprüche, **dadurch gekennzeichnet, dass** die Wegfördereinrichtung (40) ebenfalls ein Vakuumförderband (41) umfasst.

7. Vorrichtung gemäss einem der vorhergehenden Ansprüche, **dadurch gekennzeichnet, dass** an dem ersten Anschlagelement (31) eine Luftdüsenvorrichtung (39) angeordnet ist, welche, nach dem Anschlag des Stapels (10) am ersten Anschlagelement (31), ein Luftkissen zwischen der Oberseite des vorzugsweise unterhalb des ersten Anschlagelements (31) hindurchgeförderten Druckprodukts (1') und dem restlichen Stapel (10') erzeugt.

8. Vorrichtung gemäss Anspruch 7, **dadurch gekennzeichnet, dass** die Luftdüsenvorrichtung (39) eine erste Erkennungsvorrichtung (33) umfasst, welche zur Erkennung der Vorderkante (1a') des untersten Druckprodukts (1') unmittelbar nach dem Anschlag des Stapels (10) am ersten Anschlagelement (31) dient.

9. Vorrichtung gemäss einem der vorhergehenden Ansprüche, **dadurch gekennzeichnet, dass** die Wegfördereinrichtung (40) ein Andrückelement (42) für das vereinzelte Druckprodukt (1') aufweist.

10. Vorrichtung gemäss einem der vorhergehenden Ansprüche, **dadurch gekennzeichnet, dass** an der Halterung (30) eine zweite Erkennungsvorrichtung (46) angeordnet ist, welche erkennt, wann die Vorderkante (1a) des vereinzelten Druckprodukts (1') von der Wegfördereinrichtung (40) erfasst wurde.

11. Vorrichtung gemäss einem der vorhergehenden Ansprüche, **dadurch gekennzeichnet, dass** die Zufördereinrichtung (20) ein zweites, rückwärtiges, Anschlagelement (23) umfasst.

12. Verfahren zum Vereinzeln von Druckprodukten (1, 1') aus einem Stapel (10), umfassend die folgenden Schritte:
(a) jedenfalls abschnittsweises Ansaugen der Unterseite des untersten Druckprodukts (1) aus dem Stapel (10) mittels eines in einer Zufördereinrichtung (20) erzeugten Vakuums;
(b) Bewegen des Stapels (10) mittels der Zufördereinrichtung (20) gegen ein erstes Anschlagelement (31), so dass
(c) das unterste Druckprodukt (1') aus dem Stapel (10) das erste Anschlagelement (31) passiert und
(d) von einer Wegfördereinrichtung (40) übernommen und weggefördert wird.

13. Verfahren gemäss Anspruch 12, **dadurch gekennzeichnet, dass** die Zufördereinrichtung (20) und die Wegfördereinrichtung (40) Vakuumförderbänder (21, 41) umfassen, wobei vorzugsweise das Vakuumförderband (41) der Wegfördereinrichtung (40) eine Breite (B₃) aufweist welche grösser ist als die Breite (B₁) des Vakuumförderbands (21) der Zufördereinrichtung (20).

14. Verfahren gemäss Anspruch 12 oder 13, **dadurch gekennzeichnet, dass** jedenfalls zu Beginn der Übernahme des untersten Druckprodukts (1') durch die Wegfördereinrichtung (40) die Vakuumförderbänder (21, 41) der Zufördereinrichtung (20) und der Wegfördereinrichtung (40) synchron mit derselben Geschwindigkeit betrieben werden.

15. Verfahren gemäss einem der Ansprüche 12 bis 14, **dadurch gekennzeichnet, dass** die Zufördereinrichtung (20) mit dem restlichen Stapel (10') in rückwärtiger Richtung (R) bewegt wird noch bevor die Übernahme des untersten Druckprodukts (1') durch die Wegfördereinrichtung (40) abgeschlossen ist, wobei vorzugsweise anschliessend der restliche Stapel (10') an einem zweiten, rückwärtigen, Anschlagelement (23) ausgerichtet wird.

16. Verfahren gemäss Anspruch 15, **dadurch gekennzeichnet, dass** während des Rücktransports des restlichen Stapels (10') Informationen auf der Unterseite des nunmehr untersten Druckprodukts (1'') des Reststapels (10') ausgelesen werden.

17. Verfahren gemäss einem der Ansprüche 12 bis 16, **dadurch gekennzeichnet, dass** das erste Anschlagelement (31) gegenüber einer Halterung (30) höhenjustierbar ist.
